# EUROPÄISCHE PATENTSCHRIFT

(11) **EP 3 467 419 B1**
(45) Veröffentlichungstag und Bekanntmachung des Hinweises auf die Patenterteilung: **02.09.2020**
(21) Anmeldenummer: 18197196.1
(22) Anmeldetag: 27.09.2018
(51) Int. Cl.: F28D 7/02, F24H 1/52, F24H 8/00, F28D 7/10, F28D 20/02, F28D 21/00

(54) **EINE KOMBITHERME, DIE DIE RÜCKGEWINNUNG DER ABWÄRME GEWÄHRLEISTET**
A COMBI BOILER WHICH ENSURES THE RECOVERY OF WASTE HEAT
SOURCE THERMALE COMBINÉE GARANTISSANT LA RÉCUPÉRATION DE LA CHALEUR

(30) Priorität: 09.10.2017 TR 201715211
(43) Veröffentlichungstag der Anmeldung: 10.04.2019
(73) Patentinhaber: Bosch Termoteknik Isitma ve Klima Sanayi Ticaret Anonim Sirketi, 45030 Manisa (TR)
(72) Erfinder: Turhan, Zafer, 45030 Manisa (TR); Balci, Ozan Mert, 45030 Manisa (TR)
(74) Vertreter: Bee, Joachim

(56) Entgegenhaltungen:
- EP-A2- 2 133 630
- WO-A1-2011/095845
- WO-A1-2014/023959
- GB-A- 2 544 556
- US-A- 4 250 866

## Beschreibung

### TECHNISCHES GEBIET

Die Erfindung betrifft eine Kombitherme, die mindestens eine Wasserzulaufleitung und einen Abzug besitzt, durch den die Abgase strömen. EP2133630A2 offenbart eine Kombitherme gemäss dem Oberbegriff des Patentanspruchs 1.

### STAND DER TECHNIK

Kombithermen sind im Allgemeinen Geräte, die sowohl zur Beheizung von Wohnbereichen als auch zur Warmwasserbereitung verwendet werden. Sie besitzen im Allgemeinen eine Kaltwasserzulaufleitung, zwei Wärmetauscher und einen Abzug, der die Abgase in die Atmosphäre ableitet. Das Kaltwasser wird im primären Wärmetauscher erhitzt, zirkuliert in der Heizungsanlage und sorgt für die Beheizung. Darüber hinaus durchläuft das erhitzte Wasser auf Wunsch des Nutzers einen sekundären Wärmetauscher und überträgt seine Wärme an das Leitungswasser. Das Leitungswasser wird über andere Rohre an Wohnbereiche wie Küche und Bad geleitet und in der gewünschten Temperatur an den Nutzer weitergegeben. Im primären Wärmetauscher wird ein brennbares Gas-Luft-Gemisch verbrannt, um das Wasser zu erhitzen. Das Gas, das als Abfallprodukt entsteht, wird über den Abzug in die Atmosphäre abgegeben. Da das Abgas nicht umgewandelt und direkt in die Atmosphäre abgegeben wird, entsteht ein Energieverlust.

Die Patentanmeldung Nummer US4250866 betrifft einen Wärmespeicher zur Steigerung der Ofeneffizienz. Dementsprechend umfasst ein Latentspeicherofen einen primären Wärmetauscher, der mit traditionellem Kraftstoff befeuert wird, und einen sekundären Wärmetauscher, der mit dem Kamin in Beziehung steht. Der sekundäre Wärmetauscher umfasst ein Phasenwechselmaterial, das eine Übergangstemperatur im Kamintemperaturbereich besitzt und sich mit den Abgasen, die durch den Kamin strömen, im Wärmeaustausch befindet. Der sekundäre Wärmetauscher umfasst außerdem Kanäle für den Transport der Zirkulationsluft, die mit dem Phasenwechselmaterial im Wärmeaustausch steht. Im sekundären Wärmetauscher befindet sich ein Fließweg als alternativer Weg, der von einem Dämpfer kontrolliert wird. Wenn der primäre Wärmetauscher aktiviert wird, wird das im sekundären Wärmetauscher befindliche Phasenwechselmaterial mit den Abgasen des primären Wärmetauschers beaufschlagt.

Wenn das Phasenwechselmaterial bereit ist, die gespeicherte Wärme abzugeben, deaktiviert eine wärmeempfindliche Steuerung den primären Wärmetauscher und leitet die Luft um, die im sekundären Wärmetauscher zirkuliert.

Die Patentanmeldung Nummer US2013105126 betrifft einen Thermalenergie-Wärmetauscher für ein Heiz-, Belüftungs- und Luftbehandlungssystem. Der betreffende Thermalenergie-Wärmetauscher umfasst mehrere primäre Rohre, die mit mehreren sekundären Rohren alternierend in Betrieb sind und in denen eine Flüssigkeit fließt. Mindestens eines der sekundären Rohre umfasst ein Phasenwechselmaterial, das teilweise in dem Rohr angeordnet ist.

Folglich erfordern alle oben stehenden Probleme eine Neuheit auf dem betreffenden technischen Gebiet.

### KURZDARSTELLUNG DER ERFINDUNG

Die vorliegende Erfindung betrifft eine Kombitherme, die Abwärme nutzt, um die oben beschriebenen Nachteile zu beseitigen und neue Vorteile für das betreffende technische Gebiet zu schaffen.

Zweck der Erfindung ist, eine Kombitherme zu entwickeln, die mithilfe der Abwärme den auftretenden Energieverlust reduziert.

Die vorliegende Erfindung ist eine Kombitherme, die mindestens eine Wasserzulaufleitung und einen Abzug besitzt, durch den die Abgase strömen, um alle Zwecke zu erfüllen, die oben genannt und unten in der detaillierten Beschreibung dargestellt werden. Der Abzug umfasst mindestens ein Wärmespeicherelement, das neben dem Abzugskanal im Abzug angeordnet ist und in dem sich mindestens ein Phasenwechselmaterial befindet, das aus dem Abgas, das durch den Abzug strömt, durch Wärmetransfer Wärmeenergie speichert. Die Wasserzulaufleitung umfasst mindestens eine Vorheizleitung, die neben dem Wärmespeicherelement angeordnet ist, um den Wärmetransfer zwischen sich und dem genannten Wärmespeicherelement zu gewährleisten. Auf diese Weise verhindert die Vorerwärmung des Wassers in der Wasserzulaufleitung durch die Verwendung der Abgase, dass die Abgase durch den Abzug direkt in die Luft abgegeben werden, und gewährleistet, dass die Energie bzw. der Brennstoff reduziert wird, die der primäre Wärmetauscher aufwendet, um den sekundären Wärmetauscher mit Heißwasser zu versorgen. Somit wird die Energieeffizienz der Kombitherme erhöht.

Bei einer möglichen Ausführung der Erfindung erstreckt sich die Vorheizleitung zumindest teilweise im Wärmespeicherelement, sodass sie zumindest teilweise von Phasenwechselmaterial umgeben wird. Auf diese Weise wird vom Phasenwechselmaterial Wärme auf das Wasser in der Vorheizleitung übertragen.

Bei einer möglichen Ausführung der Erfindung wird gewährleistet, dass sich ein Abzugskanal und ein Wärmespeicherelement zumindest teilweise umgeben. Auf diese Weise wird der Wärmeaustausch zwischen dem Abgas im Abzugskanal und dem Phasenwechselmaterial im Wärmespeicherelement gesteigert.

Bei einer möglichen Ausführung der Erfindung bestehen der Abzugskanal und das Wärmespeicherelement aus mehreren Schichten, die sich gegenseitig umgeben. Auf diese Weise werden die Wärmeaustauschleistung und die Energieeffizienz gesteigert.

Eine mögliche Ausführung der Erfindung umfasst mehrere Vorheizleitungen, die sich in jedem Wärmespeicherelement erstrecken. Auf diese Weise wird die Wärme, die auf das Kaltwasser übertragen wird, gesteigert und das Wasser erreicht die Wärmetauscher mit einer höheren Temperatur.

Bei einer möglichen Ausführung der Erfindung erstreckt sich die Vorheizleitung spiralförmig im Wärmespeicherelement. Auf diese Weise wird gewährleistet, dass das Vorheizelement länger im Wärmespeicherelement zirkuliert und dass die Wärme, die im Wärmespeicherelement gespeichert wird, effektiver an das Wasser abgegeben wird.

Bei einer möglichen Ausführung der Erfindung besitzt das Wärmespeicherelement mehrere Phasenwechselmaterialien, die unterschiedliche Schmelztemperaturen besitzen. Auf diese Weise können die Abgase, die in den Abzug eintreten, gewährleisten, dass das Wärmespeicherelement auch bei sinkender Temperatur schmilzt.

Bei einer möglichen Ausführung der Erfindung werden die Phasenwechselmaterialien entsprechend der Fließrichtung der Abgase von Phasenwechselmaterialien mit hoher Schmelztemperatur zu Phasenwechselmaterialien mit niedriger Schmelztemperatur angeordnet. Auf diese Weise können Phasenwechselmaterialien jeder Schmelztemperatur auf der gesamten Länge des Abzugs vollständig schmelzen und es steigt nicht nur die gespeicherte Energiemenge, sondern auch das gesamte Wasser, das in der Vorheizleitung zirkuliert, kann erhitzt werden.

### KURZBESCHREIBUNG DER FIGUR

Figur 1 zeigt eine schematische Darstellung der erfindungsgegenständlichen Kombitherme.
Figur 2 zeigt eine schematische Darstellung des Abzugs der erfindungsgegenständlichen Kombitherme.
Figur 3 zeigt eine detaillierte Darstellung des Abzugs der erfindungsgegenständlichen Kombitherme.
Figur 4 zeigt einen Querschnitt des Abzugs der erfindungsgegenständlichen Kombitherme.

### DETAILLIERTE BESCHREIBUNG DER ERFINDUNG

In dieser detaillierten Beschreibung wird die erfindungsgegenständliche Kombitherme (10) zum besseren Verständnis anhand von Beispielen, die keine einschränkende Wirkung haben, erläutert.

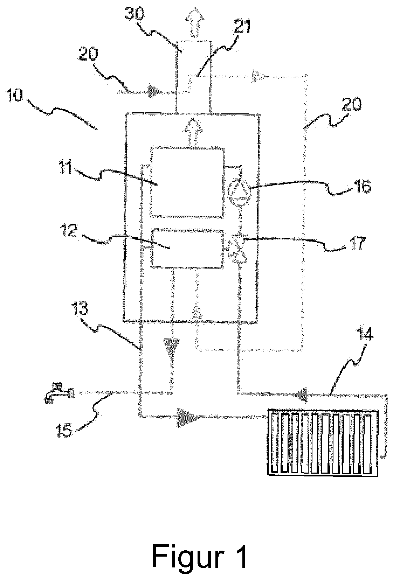

Figur 1 veranschaulicht eine Kombitherme (10), in der sich ein primärer Wärmetauscher (11) und ein sekundärer Wärmetauscher (12) befinden, die mit einer Wasserzulaufleitung (20) verbunden sind. Es ist ein Zentralheizungszulauf (13), der aus dem primären Wärmetauscher (11) und sekundären Wärmetauscher (12) austritt, und ein Zentralheizungsrücklauf (14), der in den primären Wärmetauscher (11) und sekundären Wärmetauscher (12) eintritt, vorhanden. Am Eingang des primären Wärmetauschers (11) befindet sich für den Zentralheizungsrücklauf (14) eine Zirkulationspumpe (16) und am Eingang des sekundären Wärmetauschers (12) ein Drei-Wege-Ventil (17). Außerdem ist am sekundären Wärmetauscher (12) ein Heißwasserausgang (15) vorhanden. Das Wasser, das mit der Wärmeenergie, die infolge der Verbrennung des Luft-Gas-Gemisches im primären Wärmetauscher (11) entsteht, und der Zirkulationspumpe (16) bewegt wird, wird für die zentrale Beheizung an die Heizkörper geleitet, abgekühlt und zum primären Wärmetauscher (11) zurückgeführt. Wenn der Nutzer außer der zentralen Beheizung auch Warmwasser wünscht, wird das Wasser, das im primären Wärmetauscher (11) erhitzt wurde, mithilfe des Drei-Wege-Ventils (17) zum sekundären Wärmetauscher (12) geleitet und das Leitungswasser, das am sekundären Wärmetauscher (12) ankommt, auf die gewünschte Temperatur erhitzt und für den Benutzer bereitgestellt. In beiden Betriebszyklen werden die Abgase, die infolge der Verbrennung entstehen, über den Abzug (30) in die Atmosphäre geleitet.

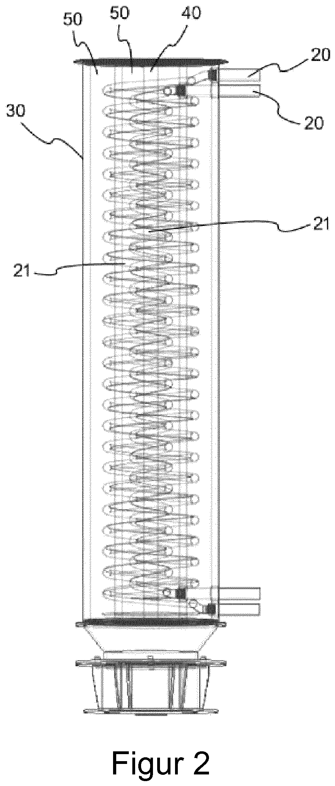

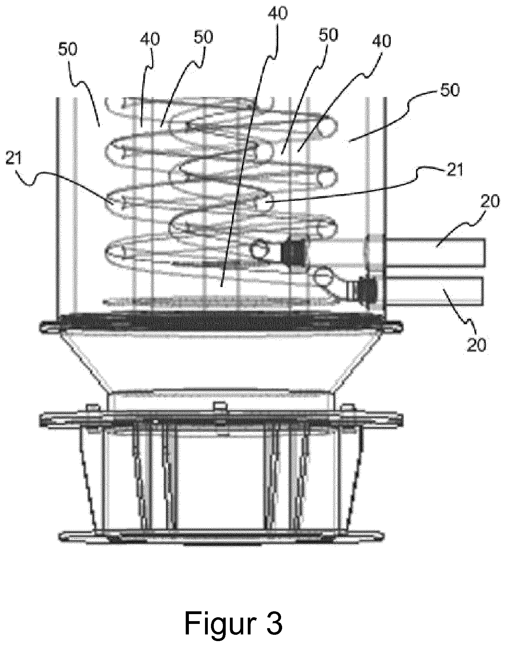

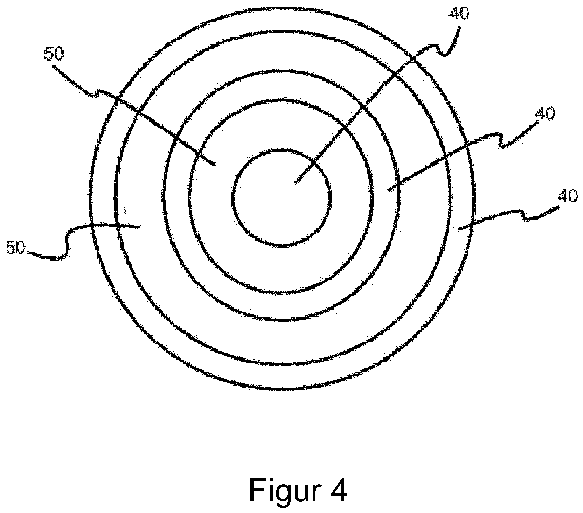

Figur 2 und Figur 3 veranschaulichen die zylindrische Form des Abzugs (30). Der Abzug (30) kann sich, abhängig vom Aufstellungsort der Kombitherme (10), von der Kombitherme (10) senkrecht oder in einem bestimmten Winkel nach oben erstrecken. Im Abzug (30) gibt es mindestens einen Abzugskanal (40). Neben dem Abzugskanal (40) ist mindestens ein Wärmespeicherelement (50) angeordnet. Bei einer möglichen Ausführung der Erfindung wird gewährleistet, dass sich ein Abzugskanal (40) und ein Wärmespeicherelement (50) zumindest teilweise umgeben. Figur 4 veranschaulicht, wie bei einer anderen möglichen Ausführung der Erfindung, dass der Abzugskanal (40) und das Wärmespeicherelement (50) aus mehreren Schichten bestehen, die sich gegenseitig umgeben. Im Wärmespeicherelement (50) befindet sich mindestens ein Phasenwechselmaterial. Das Phasenwechselmaterial ist ein Material, das vom festen in den flüssigen Zustand wechselt, wenn es Wärme speichert. Es gibt Phasenwechselmaterialien, die unterschiedliche Schmelztemperaturen besitzen. Im Wärmespeicherelement (50) befinden sich mehrere Phasenwechselmaterialien mit unterschiedlichen Schmelztemperaturen. Die technische Bezeichnung für das Phasenwechselmaterial ist PCM (phase change material).

Die Wasserzulaufleitung (20) besitzt eine Vorheizleitung (21), die neben dem Wärmespeicherelement (50) angeordnet ist, das über den Wärmetransfer aus dem Abgas, das durch den Abzug strömt, Wärmeenergie speichert. Die Vorheizleitung (21) ist so angeordnet, dass der Wärmetransfer zwischen ihr und dem Wärmespeicherelement (50) gewährleistet ist. Die Vorheizleitung (21) erstreckt sich zumindest teilweise im Wärmespeicherelement (50) und wird zumindest teilweise von Phasenwechselmaterial umgeben. Vorzugsweise gibt es mehrere Vorheizleitungen (21), die sich in jedem Wärmespeicherelement (50) erstrecken. Die Vorheizleitung (21) kann sich im Wärmespeicherelement (50) spiralförmig erstrecken. Auf diese Weise wird gewährleistet, dass die Vorheizleitung (21) länger im Wärmespeicherelement (50) zirkuliert.

Bevor das in der Wasserzulaufleitung (20) befindliche Kaltwasser im primären Wärmetauscher (11) und sekundären Wärmetauscher (12) erhitzt wird, wird es folgendermaßen in der Vorheizleitung (21) vorerhitzt.

Das heiße Abgas, das infolge des Verbrennungs- und Erhitzungsprozesses in der Kombitherme (10) entsteht, strömt in den Abzug (30) und zirkuliert in den Abzugskanälen (40). Das heiße Abgas erwärmt das Phasenwechselmaterial, das sich in den Wärmespeicherelementen (50) befindet. Das erwärmte Phasenwechselmaterial speichert die Wärme, erreicht die Schmelztemperatur und geht in den flüssigen Zustand über. Das Wasser, das sich in der Vorheizleitung (21) befindet, die zumindest teilweise vom Phasenwechselmaterial umgeben wird, erwärmt sich, indem es die Wärme des Phasenwechselmaterials aufnimmt. Das Phasenwechselmaterial kühlt sich erneut ab und geht wieder in eine feste Form über. Das Phasenwechselmaterial, das eine feste Form angenommen hat, wird durch das Abgas ständig erhitzt, sodass es sich um einen kontinuierlichen Prozess handelt.

Je höher das heiße Abgas im Abzug (30) steigt, desto niedriger werden seine Temperatur und somit auch die Temperatur, die gewährleistet, dass das Phasenwechselmaterial schmilzt. Deshalb werden die Phasenwechselmaterialien in den Wärmespeicherelementen (50) entsprechend der Fließrichtung der Abgase von Phasenwechselmaterialien mit hoher Schmelztemperatur zu Phasenwechselmaterialien mit niedriger Schmelztemperatur angeordnet. Auf diese Weise können Phasenwechselmaterialien jeder Schmelztemperatur auf der gesamten Länge des Abzugs (30) vollständig schmelzen und das gesamte Wasser, das in der Vorheizleitung (21) zirkuliert, erhitzen.

Die Vorerwärmung des Wassers in der Wasserzulaufleitung (20) durch die Verwendung der Abgase, verhindert, dass die Abgase durch den Abzug (30) direkt in die Luft abgegeben werden, und gewährleistet, dass die Energie bzw. der Brennstoff reduziert wird, die der primäre Wärmetauscher (11) aufwendet, um den sekundären Wärmetauscher (12) mit Heißwasser zu versorgen. Somit wird die Energieeffizienz der Kombitherme (10) erhöht.

Infolge des effizienteren Betriebes der Kombitherme reduzieren sich der Abgasverbrauch und der Abgasausstoß in Abhängigkeit von der in die Umwelt abgegebenen Gasmenge.

Der Schutzumfang der Erfindung wird in den beiliegenden Ansprüchen beschrieben und darf keinesfalls auf das in dieser detaillierten Beschreibung zu Beispielzwecken Gesagte beschränkt werden. Denn es ist offensichtlich, dass ein Fachmann in Bezug auf die Technik unter Berücksichtigung des oben Gesagten ähnliche Ausführungen gemäss dem Schutzumfang der Ansprüche entwickeln kann, ohne vom Grundgedanken der Erfindung abzuweichen.

### REFERENZNUMMERN

- 10: Kombitherme
- 11: Primärer Wärmetauscher
- 12: Sekundärer Wärmetauscher
- 13: Zentralheizungszulauf
- 14: Zentralheizungsrücklauf
- 15: Heißwasserausgang
- 16: Zirkulationspumpe
- 17: Drei-Wege-Ventil

- 20: Wasserzulaufleitung
- 21: Vorheizleitung

- 30: Abzug
- 40: Abzugskanal
- 50: Wärmespeicherelement

## Patentansprüche

1. Kombitherme (10), die mindestens eine Wasserzulaufleitung (20) und einen Abzug (30), durch den die Abgase strömen, besitzt, **dadurch gekennzeichnet, dass** der Abzug (30) mindestens ein Wärmespeicherelement (50) umfasst, das neben dem Abzugskanal (40) im Abzug angeordnet ist und in dem sich mindestens ein Phasenwechselmaterial befindet, das aus dem Abgas, das durch den Abzug strömt, durch Wärmetransfer Wärmeenergie speichert, und dass die Wasserzulaufleitung (20) mindestens eine Vorheizleitung (21) umfasst, die neben dem Wärmespeicherelement (50) angeordnet ist, um den Wärmetransfer zwischen sich und dem genannten Wärmespeicherelement (50) zu gewährleisten.

2. Kombitherme (10) nach Anspruch 1, **dadurch gekennzeichnet, dass** sich die Vorheizleitung (21) zumindest teilweise im Wärmespeicherelement (50) erstreckt, sodass sie zumindest teilweise von Phasenwechselmaterial umgeben wird.

3. Kombitherme (10) nach Anspruch 1, **dadurch gekennzeichnet, dass** sich ein Abzugskanal (40) und ein Wärmespeicherelement (50) zumindest teilweise umgeben.

4. Kombitherme (10) nach Anspruch 3, **dadurch gekennzeichnet, dass** der Abzugskanal (40) und das Wärmespeicherelement (50) aus mehreren Schichten bestehen, die sich gegenseitig umgeben.

5. Kombitherme (10) nach Anspruch 4, **dadurch gekennzeichnet, dass** sich mehrere Vorheizleitungen (21) in jedem Wärmespeicherelement (50) erstrecken.

6. Kombitherme (10) nach Anspruch 2, **dadurch gekennzeichnet, dass** die Vorheizleitung (21) sich im Wärmespeicherelement (50) spiralförmig erstreckt.

7. Kombitherme (10) nach einem der vorhergehenden Ansprüche, **dadurch gekennzeichnet, dass** das Wärmespeicherelement (50) mehrere Phasenwechselmaterialien besitzt, die unterschiedliche Schmelztemperaturen besitzen.

8. Kombitherme (10) nach Anspruch 7, **dadurch gekennzeichnet, dass** die Phasenwechselmaterialien entsprechend der Fließrichtung der Abgase von Phasenwechselmaterialien mit hoher Schmelztemperatur zu Phasenwechselmaterialien mit niedriger Schmelztemperatur angeordnet sind.

## Claims

1. Combi boiler (10), which has at least one water inflow line (20) and an outlet (30), through which the waste gases flow, **characterized in that** the outlet (30) comprises at least one heat storage element (50), which is arranged alongside the outlet duct (40) in the outlet and in which there is at least one phase change material, which by heat transfer stores thermal energy from the waste gas that flows through the outlet, and **in that** the water inflow line (20) comprises at least one preheating line (21), which is arranged alongside the heat storage element (50) in order to ensure the heat transfer between it and the said heat storage element (50).

2. Combi boiler (10) according to Claim 1, **characterized in that** the preheating line (21) extends at least partially in the heat storage element (50), so that it is at least partially surrounded by phase change material.

3. Combi boiler (10) according to Claim 1, **characterized in that** an outlet duct (40) and a heat storage element (50) at least partially surround one another.

4. Combi boiler (10) according to Claim 3, **characterized in that** the outlet duct (40) and the heat storage element (50) consist of multiple layers that surround one another.

5. Combi boiler (10) according to Claim 4, **characterized in that** multiple preheating lines (21) extend in each heat storage element (50).

6. Combi boiler (10) according to Claim 2, **characterized in that** the preheating line (21) extends spirally in the heat storage element (50).

7. Combi boiler (10) according to one of the preceding claims, **characterized in that** the heat storage element (50) has multiple phase change materials, which have different melting temperatures.

8. Combi boiler (10) according to Claim 7, **characterized in that** the phase change materials are arranged in a way corresponding to the direction of flow of the waste gases from phase change materials with a high melting temperature to phase change materials with a low melting temperature.

## Revendications

1. Source thermale combinée (10), qui possède au moins une conduite d'alimentation en eau (20) et une évacuation (30) à travers laquelle s'écoulent les gaz d'échappement, **caractérisée en ce que** l'évacuation (30) comprend au moins un élément accumulateur de chaleur (50) qui est disposé dans l'évacuation à côté du canal d'évacuation (40) et dans lequel se trouve au moins un matériau de changement de phase, qui stocke par transfert thermique, de l'énergie thermique provenant du gaz d'échappement qui s'écoule à travers l'évacuation, et **en ce que** la conduite d'alimentation en eau (20) comprend au moins une conduite de préchauffage (21) qui est disposée à côté de l'élément accumulateur de chaleur (50) afin de garantir le transfert thermique entre celle-ci et ledit élément accumulateur de chaleur (50).

2. Source thermale combinée (10) selon la revendication 1, **caractérisée en ce que** la conduite de préchauffage (21) s'étend au moins en partie dans l'élément accumulateur de chaleur (50) de telle sorte qu'elle soit entourée au moins en partie par le matériau de changement de phase.

3. Source thermale combinée (10) selon la revendication 1, **caractérisée en ce qu'**un canal d'évacuation (40) et un élément accumulateur de chaleur (50) s'entourent au moins en partie.

4. Source thermale combinée (10) selon la revendication 3, **caractérisée en ce que** le canal d'évacuation (40) et l'élément accumulateur de chaleur (50) se composent de plusieurs couches qui s'entourent mutuellement.

5. Source thermale combinée (10) selon la revendication 4, **caractérisée en ce que** plusieurs conduites de préchauffage (21) s'étendent dans chaque élément accumulateur de chaleur (50).

6. Source thermale combinée (10) selon la revendication 2, **caractérisée en ce que** la conduite de préchauffage (21) s'étend en spirale dans l'élément accumulateur de chaleur (50).

7. Source thermale combinée (10) selon l'une quelconque des revendications précédentes, **caractérisée en ce que** l'élément accumulateur de chaleur (50) possède plusieurs matériaux de changement de phase qui possèdent des températures de fusion différentes.

8. Source thermale combinée (10) selon la revendication 7, **caractérisée en ce que** les matériaux de changement de phase sont disposés de manière correspondant à la direction d'écoulement des gaz d'échappement des matériaux de changement de phase ayant une haute température de fusion aux matériaux de changement de phase ayant une faible température de fusion.
